# FASCICULE DE BREVET EUROPEEN

(11) **EP 1 212 649 B1**
(45) Date de publication et mention de la délivrance du brevet: **08.03.2006**
(21) Numéro de dépôt: 00962587.2
(22) Date de dépôt: 08.09.2000
(51) Int. Cl.: G02B 17/06, G02B 21/22

(54) **Utilisation d'un dispositif pour l'acquisition d'images stéréoscopiques**
Verwendung einer Vorrichtung zur Aufnahme stereoskopischer Bilder
Use of a device for acquiring stereoscopic images

(30) Priorité: 10.09.1999 FR 9911355
(43) Date de publication de la demande: 12.06.2002
(73) Titulaire: CENTRE NATIONAL D'ETUDES SPATIALES, 75001 Paris (FR)
(72) Inventeur: COSTES, Vincent, F-31850 Montrabe (FR)
(74) Mandataire: Callon de Lamarck, Jean-Robert
(86) Numéro de dépôt international: PCT/FR2000/002486
(87) Numéro de publication internationale: WO 2001/020385

(56) Documents cités:
- EP-A- 0 655 636
- DE-A- 4 307 831
- FR-A- 1 393 577
- GB-A- 2 158 261
- US-A- 5 661 610

## Description

La présente Mention est relative à acquisition d'images stéréoscopiques.

On rappelle que les images stéréoscopiques sont obtenues en visualisant une même scène avec deux angles d'incidence différents.

Le but est de proposer un dispositif d'acquisition stéréoscopique particulièrement simple, compact et adapté aux très bonnes résolutions angulaires.

Le document FR 1 393 577 décrit un dispositif de collimation pour rayonnement infrarouge. Ce dispositif comprend :
- un miroir primaire parabolique,
- un miroir secondaire hyperbolique, positionné entre le miroir primaire M1 et son foyer,
- un miroir tertiaire elliptique, disposé par rapport au miroir primaire du côté opposé au miroir secondaire,
- un détecteur positionné au foyer du miroir tertiaire.

Un tel dispositif permet de concentrer un faisceau optique reçu par le miroir primaire parallèlement à son axe optique sur le détecteur.>

On connait déjà par DE 43 07 831 des structures de télescope binoculaires qui permettent d'observer des scènes lointaines et qui comportent:
- un miroir parabolique
- des miroirs secondaires situés de part et d'autre de l'axe optique du miroir 5 primaire, entre ledit miroir primaire et son plan focal,
- des moyens de réflexion tertiaires qui sont disposés par rapport au miroir primaire du côté opposé au miroir secondaire, et dans lequel le miroir primaire est apte à être traversé par les faisceaux optiques réfléchis par les miroirs secondaires pour leur permettre d"atteindre les moyens de réflexion tertiaires.

Le document UK 2 158 261 décrit un dispositif optique similaire, comprenant un miroir primaire sphérique concave, un miroir secondaire sphérique convexe positionné sur l'axe optique du miroir primaire, les miroir primaire étant apte à être traversé par: les faisceaux optique réfléchis par le miroir secondaire pour leur permettre d'atteindre une lentille catadioptrique. Un tel dispositif permet de séparer un faisceau incident parallèle à l'axe optique en deux faisceaux, ces deux faisceaux correspondant respectivement aux portions du faisceau passant de part et d'autre des demi-miroirs secondaires.

Le document EP O 655 636 décrit un dispositif oculaire de visée comprenant une pupille d'entrée, un miroir primaire, un miroir secondaire et une lentille de réfraction. Les éléments sont disposés pour transmettre une image de la lentille de réfraction vers la pupille d'entrée.

Un tel téléscope est destiné à permettre l'observation d'objets très éloignés (application à l'astronomie par exemple) et ne permet aucunement l'acquisition d'images stéréoscopiques.

L'invention propose quant à elle l'utilisation d'un dispositif optique qui permet d'observer une même scène avec des angles d'incidence différents pour l'acquisition d'une image stéréoscopique au moyen d'un satellite se déplaçant au dessus de la Terre et observant une même scène à deux instants différents et donc sous deux angles différents.

Ainsi, l'invention propose l'utilisation selon la revendication 1.

L'invention est avantageusement complétée par les différentes caractéristiques suivantes, prises seules ou selon toutes leurs combinaisons techniquement possibles :
- les deux directions d'incidence qu'il observe sont symétriques par rapport à l'axe optique et les faisceaux optiques qui arrivent sur le miroir primaire selon ces deux directions d'incidence sont réfléchis par le miroir secondaire symétriquement par rapport à l'axe optique ;
- les moyens de réflexion tertiaires comportent deux miroirs plans disposés symétriquement de part et d'autre de la direction de l'axe optique du miroir primaire, ainsi que deux miroirs concaves, également disposés symétriquement par rapport à ladite direction, les miroirs plans réfléchissant sur les miroirs concaves les faisceaux optiques qui arrivent du miroir secondaire selon les deux directions distinctes de celle de l'axe optique du miroir primaire, les miroirs concaves réfléchissant les faisceaux qu'ils reçoivent pour les focaliser sur des moyens d'acquisition ;
- les moyens de réflexion tertiaires comportent deux miroirs concaves qui sont disposés symétriquement de part et d'autre de la direction de l'axe optique du miroir primaire et qui réfléchissent les faisceaux optiques qui arrivent du miroir secondaire selon les deux directions distinctes de celle de l'axe optique du miroir primaire, ainsi qu'un miroir plan qui est commun aux deux voies et qui est centré sur la direction de l'axe optique en s'étendant perpendiculairement à ladite direction, ledit miroir plan réfléchissant les faisceaux qu'il reçoit sur des moyens d'acquisition situés au niveau d'un plan focal commun aux deux voies ;
- le miroir primaire comporte un trou central au travers duquel le miroir secondaire réfléchit la lumière ;
- le miroir secondaire focalise au niveau du miroir primaire deux images intermédiaires, les deux faisceaux optiques qu'il réfléchit correspondant aux deux directions d'incidence observées.

D'autres caractéristiques et avantages de l'invention ressortiront encore de la description qui suit. Cette description est purement illustrative et non limitative. Elle doit être lue en regard des dessins annexés sur lesquels :
- la figure 1 illustre un dispositif conforme à un mode de réalisation possible
- la figure 2 illustre un dispositif conforme à un autre mode de réalisation possible ;
- la figure 3 illustre un dispositif conforme à un troisième mode de réalisation possible ;
- la figure 4 est une représentation schématique en perspective du dispositif de la figure 3.

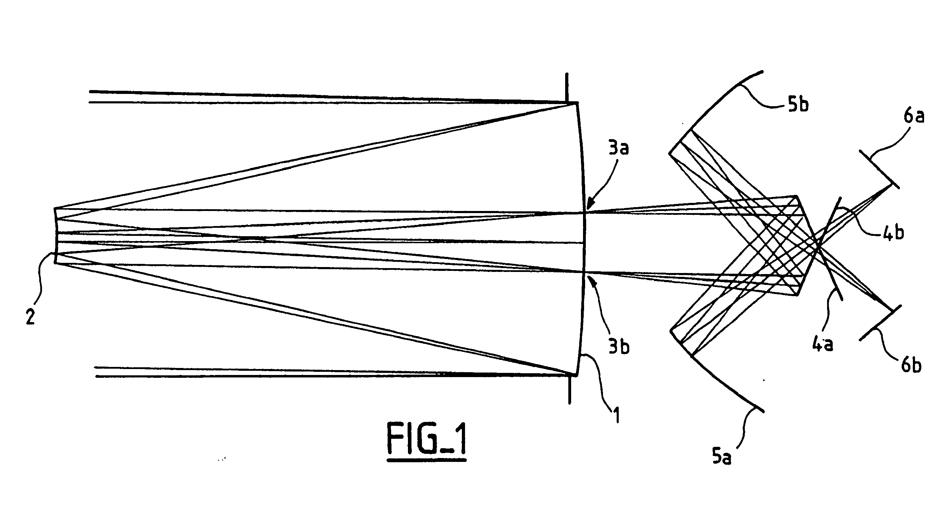

Le dispositif qui est illustré sur la figure 1 comporte un miroir primaire 1, qui est de forme conique proche de la parabole, ainsi qu'un miroir convexe 2 qui est disposé dans l'axe optique dudit miroir primaire 1 et qui intercepte les faisceaux réfléchis par ledit miroir parabolique 1 avant qu'ils atteignent le foyer de celui-ci.

Le miroir primaire 1 est percé d'un trou central permettant le passage des images intermédiaires 3a et 3b qui sont disposées symétriquement de part et d'autre de son centre.

Les miroirs primaires et secondaires 1 et 2 sont dimensionnés de telle façon que les faisceaux qui sont incidents sur ledit miroir primaire 1 avec un angle θ1 et - θ1 par rapport à l'axe optique dudit miroir primaire 1 sont focalisés respectivement sur le trou central.

Le dispositif comporte en outre deux miroirs plans 4a, 4b qui sont disposés symétriquement par rapport à l'axe optique du miroir primaire 1, en étant situés par rapport audit miroir primaire 1 du côté de celui-ci opposé au miroir secondaire 2.

Ces deux miroirs plans 4a et 4b se trouvent respectivement sur le trajet des faisceaux qui, après avoir été réfléchis par le miroir convexe 2, traversent le miroir 1 au niveau des images intermédiaires 3a et 3b.

Ces miroirs plans 4a et 4b réfléchissent les faisceaux qu'ils reçoivent en provenance des images 3a et 3b sur deux miroirs concaves 5a, 5b qui sont coniques et qui renvoient les faisceaux qu'ils reçoivent sur deux plans de focalisation 6a, 6b où sont par exemple disposées des matrices ou barrettes de détection à transfert de charge.

Comme on l'aura compris, un tel dispositif permet, de façon simple, l'acquisition de deux images qui correspondent à une même scène vue selon deux angles d'incidence différents.

D'autres variantes de réalisation que celle illustrée sur la figure 1 sont envisageables.

Notamment, selon la géométrie et les dimensions du volume dans lequel la partie arrière du télescope doit être logée, on peut bien entendu jouer sur l'orientation des miroirs plans 4a et 4b et sur celle des miroirs concaves 5a et 5b.

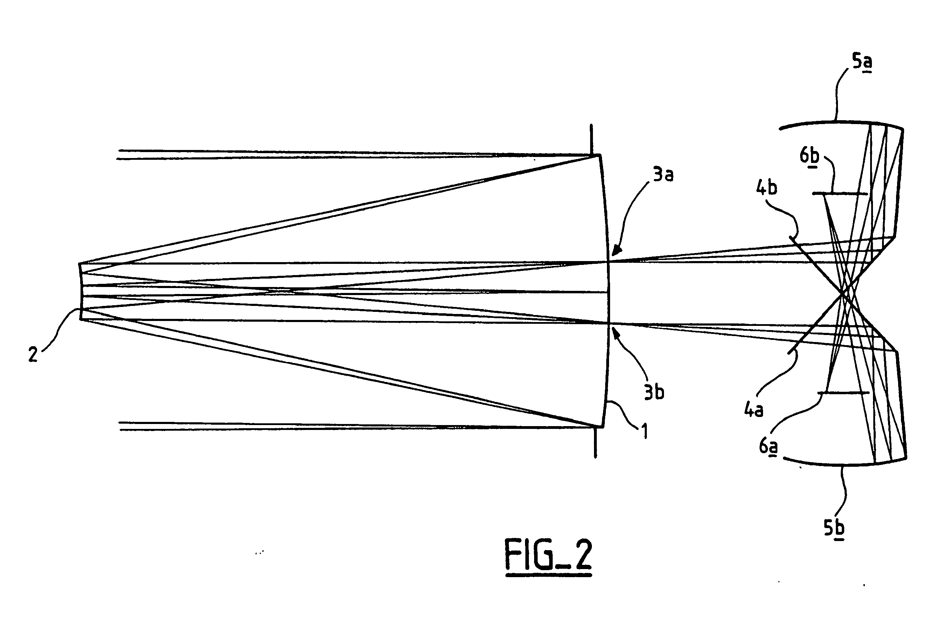

En ce sens, la figure 2 illustre un cas de figure dans lequel les plans de focalisation 6a et 6b sont parallèles à l'axe optique du miroir primaire 1 et sont interposés entre ledit axe optique et les miroirs concaves 5a, 5b.

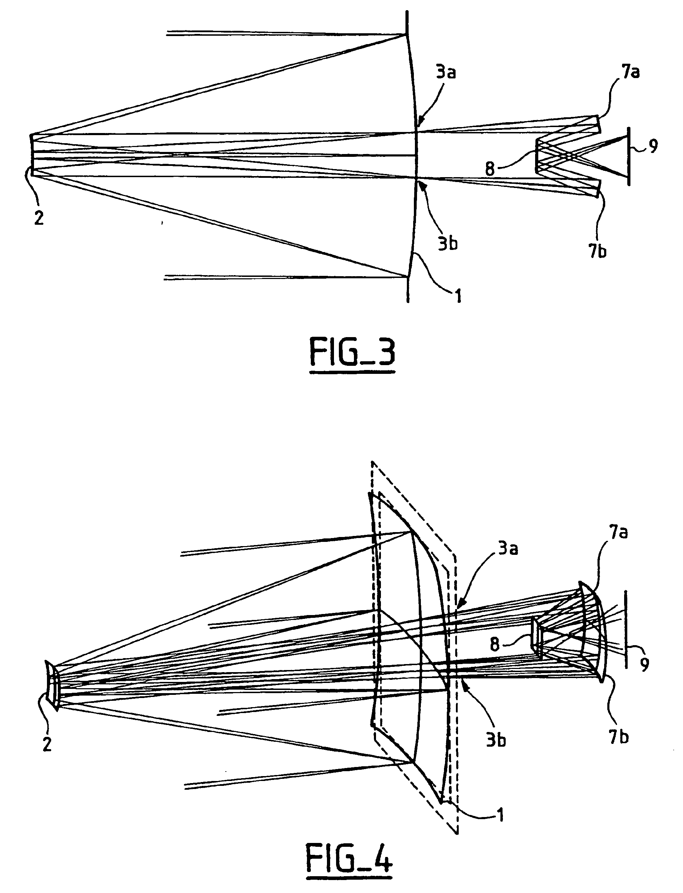

En variante encore, ainsi que l'illustrent les figures 3 et 4, les faisceaux en sortie du trou central permettant le passage des images intermédiaires 3a et 3b peuvent être réfléchis par des miroirs concaves 7a, 7b coniques, disposés symétriquement de part et d'autre de l'axe du miroir primaire 1. Ces miroirs concaves 7a, 7b focalisent les faisceaux qu'ils reçoivent en les réfléchissant sur un miroir plan 8 commun aux deux voies de réflexion. Ce miroir plan 8 est centré sur la direction de l'axe optique du miroir primaire 1 et est perpendiculaire à cette direction. Il réfléchit les faisceaux sur un plan de focalisation 9 commun aux deux voies.

Une barrette ou matrice d'éléments à transfert de charge, commune aux deux voies, est par exemple située au niveau de ce plan de focalisation 9.

Un dispositif du type de ceux qui viennent d'être décrits est avantageusement utilisé sur un satellite en orbite au dessus de la Terre, observant une même scène à deux instants distincts et donc avec des directions de visée différentes.

Ces directions de visée sont par exemple séparées angulairement d'un angle compris entre 2 et 10°.

Le dispositif proposé permet au satellite de réaliser une acquisition selon ces deux directions de visée, sans avoir à modifier l'attitude du satellite ou l'orientation du dispositif d'observation par rapport à celui-ci.

## Revendications

1. Utilisation pour l'acquisition à partir d'un satellite d'observation en orbite au dessus de la terre d'images stéréoscopiques correspondant à l'observation d'une même scène de la terre selon deux directions d'incidence données, d'un dispositif comportant :
- un miroir primaire (1) parabolique ou proche de la parabole, percé par un trou central, recevant des faisceaux optiques selon les deux direction d'incidence données,
- des moyens de réflexion secondaires (2) de type convexe qui interceptent les faisceaux réfléchis par le miroir primaire (1) avant qu'ils n'atteignent le foyer de celui-ci,
- des moyens de réflexion (4a, 4b ; 5a, 5b ; 7a, 7b ; 8) tertiaires qui sont disposés par rapport au miroir primaire (1) du côté opposé aux moyens de réflexion secondaires (2), les faisceaux reçus sur les moyens de réflexion secondaires (2) étant réfléchis par ceux-ci et traversant le trou central du miroir primaire, avant d'atteindre les moyens de réflexion tertiaires (4a, 4b ; 5a, 5b ; 7a, 7b ; 8),
- au moins une barrette ou matrice d'éléments à transfert de charge (6a, 6b ; 9) d'acquisition sur laquelle (ou lesquelles) les moyens de réflexion tertiaires (4a, 4b ; 5a, 5b ; 7a, 7b ; 8) focalisent les faisceaux optiques qu'ils reçoivent.

2. Utilisation selon la revendication 1, **caractérisée en ce que** les moyens de réflexion tertiaires comportent deux miroirs plans (4a, 4b) disposés symétriquement de part et d'autre de la direction de l'axe optique du miroir primaire (1), ainsi que deux miroirs concaves (5a, 5b), également disposés symétriquement par rapport à ladite direction, les miroirs plans (4a, 4b) réfléchissant sur les miroirs concaves (5a, 5b) les faisceaux optiques qui arrivent du miroir secondaire (2) selon les deux directions distinctes de celle de l'axe optique du miroir primaire (1), les miroirs concaves réfléchissant les faisceaux qu'ils reçoivent pour les focaliser sur au moins une barrette ou matrice d'éléments à transfert de charge (6a, 6b) d'acquisition.

3. Utilisation selon la revendication 1, **caractérisée en ce que** les moyens de réflexion tertiaires comportent deux miroirs concaves (7a, 7b) qui sont disposés symétriquement de part et d'autre de la direction de l'axe optique du miroir primaire (1) et qui réfléchissent les faisceaux optiques qui arrivent du miroir secondaire (2) selon les deux directions distinctes de celle de l'axe optique du miroir primaire (1), ainsi qu'un miroir plan (8) qui est commun aux deux voies et qui est centré sur la direction de l'axe optique en s'étendant perpendiculairement à ladite direction, ledit miroir plan (8) réfléchissant les faisceaux qu'il reçoit sur au moins une barrette ou matrice d'éléments à transfert de charge (6a, 6b) d'acquisition située au niveau d'un plan focal commun aux deux voies..

4. Utilisation selon la revendication 1, **caractérisée en ce que** le miroir secondaire (2) focalise au niveau du miroir primaire (1) deux images intermédiaires, les deux faisceaux optiques qu'ils réfléchit correspondant aux deux directions d'incidence observées.

## Claims

1. The use of a device for acquiring, by means of an observation satellite in orbit above the earth, stereoscopic images corresponding to observing the same scene of the earth along two given directions of incidence, said device comprising:
a primary mirror (1) that is parabolic or nearly parabolic, and that is pierced by a central hole, receiving light beams along the two given directions of incidence;
- secondary reflection means (2) of convex type that intercept the beams reflected by the primary mirror (1) before they reach the focus thereof;
tertiary reflection means (4a, 4b; 5a, 5b; 7a, 7b; 8) which are disposed relative to the primary mirror (1) on its side opposite from the side on which the secondary reflection means (2) are disposed, the beams received on the secondary reflection means (2) being reflected thereby and passing through the central hole of the primary mirror before reaching the tertiary reflection means (4a, 4b; 5a, 5b; 7a, 7b; 8); and
at least one acquisition strip or matrix of charge transfer devices (6a, 6b; 9) on which the tertiary reflection means (4a, 4b; 5a, 5b; 7a, 7b; 8) focus the light beams they receive.

2. A use according to claim 1, **characterized in that** the tertiary reflection means comprise two plane mirrors (4a, 4b) placed symmetrically on either side of the direction of the optical axis of the primary mirror (1), together with two concave mirrors (5a, 5b) also disposed symmetrically about said direction, the plane mirrors (4a, 4b) reflecting onto the concave mirrors (5a, 5b) the light beams which come from the secondary mirror (2) along the two directions that are distinct from the direction of the optical axis of the primary mirror (1), the concave mirrors reflecting the beams they receive so as to focus them on the at least one acquisition strip or matrix of charge transfer devices (6a, 6b).

3. A use according to claim 1, **characterized in that** the tertiary reflection means comprise two concave mirrors (7a, 7b) which are disposed symmetrically on either side of the direction of the optical axis of the primary mirror (1) and which reflect the light beams which arrive from the secondary mirror (2) along the two directions distinct from the direction of the optical axis of the primary mirror (1), together with a plane mirror (8) which is common to both paths and which is centered on the direction of the optical axis, extending perpendicularly to said direction, said plane mirror (8) reflecting the beams it receives onto at least one acquisition strip or matrix of charge transfer devices situated on a focal plane common to both paths.

4. A use according to claim 1, **characterized in that** the secondary mirror (2) focuses two intermediate images at the level of the primary mirror (1), with the two light beams they reflect corresponding to the two observed directions of incidence.

## Patentansprüche

1. Verwendung einer Vorrichtung zur Erfassung stereoskopischer Bilder, die der Beobachtung ein und desselben Gebiets der Erde aus zwei gegebenen Einfallsrichtungen entsprechen, von einem Beobachtungssatelliten in einer Umlaufbahn über der Erde, wobei die Vorrichtung folgendes umfaßt:
- einen primären Spiegel (1), der parabolisch oder nahezu parabolisch ist, der von einem zentralen Loch durchbrochen ist und der optische Strahlen aus den zwei gegebenen Einfallsrichtungen empfängt,
- sekundäre Reflexionsmittel (2) vom konvexen Typ, die die vom primären Spiegel (1) reflektierten Strahlen auffangen bevor sie dessen Brennpunkt erreichen,
- tertiäre Reflexionsmittel (4a, 4b; 5a, 5b; 7a, 7b; 8) die in Bezug auf den primären Spiegel (1) auf der den sekundären Reflexionsmitteln (2) entgegengesetzten Seite angeordnet sind, wobei die auf den sekundären Reflexionsmitteln (2) empfangenen Strahlen von diesen reflektiert werden und das zentrale Loch des primären Spiegels durchlaufen, bevor sie auf die tertiären Reflexionsmittel (4a, 4b; 5a, 5b; 7a, 7b; 8) treffen,
- wenigstens eine Zeile oder Matrix ladungsgekoppelter Erfassungselemente (6a, 6b; 9) auf die die tertiären Reflexionsmittel (4a, 4b; 5a, 5b; 7a, 7b; 8) die von ihnen empfangenen optischen Strahlen fokussieren.

2. Verwendung nach Anspruch 1, **dadurch gekennzeichnet, daß** die tertiären Reflexionsmittel zwei ebene Spiegel (4a, 4b) umfassen, die symmetrisch auf beiden Seiten der Richtung der optischen Achse des primären Spiegels (1) angeordnet sind, sowie zwei konkave Spiegel (5a, 5b), die ebenfalls symmetrisch zu der genannten Richtung angeordnet sind, wobei die ebenen Spiegel (4a, 4b) die optischen Strahlen, die vom sekundären Spiegel (2) aus den beiden Richtungen kommen, die verschieden von derjenigen der optischen Achse des primären Spiegels (1) sind, auf die konkaven Spiegel (5a, 5b) reflektieren, wobei die konkaven Spiegel die Strahlen, die sie empfangen, reflektieren, um sie auf wenigstens eine Zeile oder Matrix ladungsgekoppelter Erfassungselemente (6a, 6b) zu fokussieren.

3. Verwendung nach Anspruch 1, **dadurch gekennzeichnet, daß** die tertiären Reflexionsmittel zwei konkave Spiegel (7a, 7b) umfassen, die symmetrisch auf beiden Seiten der Richtung der optischen Achse des primären Spiegels (1) angeordnet sind und die die optischen Strahlen reflektieren, die vom sekundären Spiegel (2) aus den beiden Richtungen kommen, die verschieden von derjenigen der optischen Achse des primären Spiegels (1) sind, sowie einen ebenen Spiegel (8), der den beiden Wegen gemeinsam ist und der auf der Richtung der optischen Achse zentriert ist, wobei er sich senkrecht zu dieser Richtung erstreckt, wobei der ebene Spiegel (8) die Strahlen, die er empfängt, auf wenigstens eine Zeile oder Matrix ladungsgekoppelter Erfassungselemente (6a, 6b) reflektiert, die im Bereich einer den beiden Wegen gemeinsamen Fokalebene angeordnet sind.

4. Verwendung nach Anspruch 1, **dadurch gekennzeichnet, daß** der sekundäre Spiegel (2) im Bereich des primären Spiegels (1) zwei Zwischenbilder fokussiert, wobei die zwei optischen Strahlen, die er reflektiert, den beiden beobachteten Einfallsrichtungen entsprechen.
